Europäisches Patentamt

European Patent Office

Office européen des brevets

(19)

(11) Veröffentlichungsnummer: **0 123 802**
**B1**

(12)                    EUROPÄISCHE PATENTSCHRIFT

(45) Veröffentlichungstag der Patentschrift:
**11.05.88**

(21) Anmeldenummer: **84101591.0**

(22) Anmeldetag: **16.02.84**

(51) Int. Cl.⁴: **B 60 N 1/02**

(54) Verteiler-Kupplung.

(30) Priorität: **28.04.83 DE 3315440**

(43) Veröffentlichungstag der Anmeldung:
**07.11.84 Patentblatt 84/45**

(45) Bekanntmachung des Hinweises auf die Patenterteilung:
**11.05.88 Patentblatt 88/19**

(84) Benannte Vertragsstaaten:
**FR GB IT**

(56) Entgegenhaltungen:
**DE - A - 2 064 524**
**US - A - 3 229 955**
**US - A - 3 240 464**

(73) Patentinhaber: **KEIPER RECARO GmbH & Co.,**
**Büchelstrasse 54-58, D-5630 Remscheid 14 (DE)**

(72) Erfinder: **Wittig, Werner, Dr., Dipl.-Ing.,**
**Wiehernstrasse 37, D-6752 Winnweiler (DE)**

(74) Vertreter: **Patentanwälte Phys. Bartels Dipl.-Ing. Fink**
**Dr.-Ing. Held, Lange Strasse 51, D-7000 Stuttgart 1 (DE)**

**Beschreibung**

Die Erfindung betrifft eine Verteiler-Kupplung der im Oberbegriff des Patentanspruchs 1 angegebenen Art für die Betätigung einer Verstelleinrichtung eines Fahrzeugsitzes.

Bei Fahrzeugsitzen, beispielsweise Kraftfahrzeug- oder Luftfahrzeugsitzen, steht für den Einbau von getrieblichen Einrichtungen zur Betätigung von Sitzverstelleinrichtungen nur ein geringer Bauraum zur Verfügung. Da aus Gewichts- und Platzgründen zudem nur Antriebsmotoren verhältnismässig kleiner Abmessungen und dementsprechend begrenzter Leistung anwendbar sind, kommt es auch darauf an, dass mechanische Verteilereinrichtungen, die für die wahlweise Drehmomentübertragung vom Antriebsmotor zu einer oder mehreren Verstelleinrichtungen des Sitzes vorgesehen sind, eine möglichst verlustfreie Kraftübertragung trotz kompakter Bauweise ermöglichen.

Der Erfindung liegt demgemäss die Aufgabe zugrunde, eine Verteiler-Kupplung zu schaffen, die bei kleinen Abmessungen und geringem Gewicht eine besonders verlustarme, gesteuerte Drehmomentübertragung von einer antriebsseitigen Eingangswelle auf zumindest eine Ausgangswelle ermöglicht.

Erfindungsgemäss ist diese Aufgabe durch die im Patentanspruch 1 angegebenen Merkmale gelöst.

Dadurch, dass erfindungsgemäss zwischen angetriebener Schaltwelle und anzutreibender Ausgangswelle durch axiales Verschieben der Schaltwelle eine formschlüssige Kupplungsverbindung hergestellt, jedoch zwischen dem Mitnehmerteil der Schaltwelle und dem mit diesem zusammenwirkenden Abtriebsteil der Ausgangswelle ein axiales Spiel aufrecht erhalten wird, wird die Lagerung der betreffenden Ausgangswelle durch keinerlei Axialkräfte belastet, hat also nur die normalen radialen Lagerkräfte aufzunehmen. Es ergeben sich dabei besonders geringe Lagerverluste, d.h., es wird eine Kraftübertragung mit hohem Wirkungsgrad erreicht. Da der die Endstellung des Verschiebewegs der Schaltwelle festlegende Anschlag eine Abstützung gegen die Kraft des betreffenden Linearantriebes bildet, der die Schaltwelle in die Endstellung bewegt, kommt auch die Kraft der Linearantriebe nicht als lagerbelastende Axialkraft zur Wirkung. Der Anschlag gewährleistet ausserdem bei einfachstem Aufbau der Linearantriebe die genaue Einhaltung des gewünschten Axialspiels zwischen Mitnehmerteil und Abtriebsteil im eingekuppelten Zustand und macht damit eine besonders kompakte Bauweise möglich.

Bei einem vorteilhaften Ausführungsbeispiel gemäss Anspruch 2, bei dem die Schaltwelle zwischen zwei koaxialen Ausgangswellen angeordnet ist, ist eine wahlweise Kraftübertragung auf eine der beiden Ausgangswellen bei besonders gedrungener Bauweise möglich. Die Eingangswelle kann parallel zu der Ausgangswelle oder den Ausgangswellen verlaufend im Kupplungsgehäuse gelagert und über einen Getriebezug, beispielsweise kämmende Stirnräder, mit der Schaltwelle antriebsmässig verbunden sein. Es ist aber auch ein Antrieb über ein Winkelgetriebe, beispielsweise ein Schneckengetriebe, möglich. Wenn bei zwei gleichachsig angeordneten Ausgangswellen die Eingangswelle als Durchgangswelle ausgebildet ist, ergibt sich ein völlig symmetrischer Aufbau der Verteiler-Kupplung mit je einem Getriebeeingang und -ausgang auf jeder Gehäuseseite. Eine solche Kupplung ist verhältnismässig universell einbau- und anwendbar und gestattet es, die Anzahl der erforderlichen Antriebsmotoren gering zu halten.

Der Mitnehmerteil der Schaltwelle und der Abtriebsteil der Ausgangswelle können gemäss einem bevorzugten Ausführungsbeispiel nach Anspruch 3 durch je einen Zahnteller gebildet sein, die einander zugekehrte Planflächen mit von diesen axial vorspringenden Zähnen aufweisen, die bei der durch den zugeordneten Anschlag festgelegten Endstellung der Schaltwelle unter Beibehaltung des gewünschten axialen Spiels zwischen Zahnköpfen und Planflächen miteinander in Eingriff sind und die gewünschte axialkraftfreie Kraftübertragung gewährleisten.

Bei einem vorteilhaften Ausführungsbeispiel gemäss Anspruch 4 ist als erster Linearantrieb eine die Schaltwelle durch Federkraft normalerweise in der einen axialen Endstellung haltende Federanordnung und als zweiter Linearantrieb ein Elektromagnet vorgesehen, der einschaltbar ist, um die Schaltwelle gegen die Federkraft in die andere Endstellung zu verschieben.

Bei einem Ausführungsbeispiel mit einem im Kupplungsgehäuse drehbar und axial unverschiebbar gelagerten Zahnrad, das von einem Ritzel der Eingangswelle antreibbar ist und das mit der Schaltwelle auf Drehung verbunden ist, welch letztere in der Radnabe des Zahnrads axial verschiebbar ist, kann eine die Federanordnung des ersten Linearantriebs bildende Schrauben-Druckfeder auf der Schaltwelle zwischen dem betreffenden Zahnteller derselben und der Radnabe des Zahnrads eingespannt sein. Da die Feder sich bei dieser Anordnung beidseits an mit gleicher Winkelgeschwindigkeit umlaufenden Teilen abstützt, ist die Feder in den Anlageflächen keinerlei Relativgeschwindigkeiten ausgesetzt, d.h. die Erzeugung der Axialkraft des ersten Linearantriebs erfolgt ohne Auftreten irgendwelcher Reibungsverluste.

Letzteres gilt auch für das Erzeugen der Axialkraft mittels des durch einen Elektromagneten gebildeten zweiten Linearantriebs.

Bei einem weiteren vorteilhaften Ausführungsbeispiel gemäss Anspruch 10 sind zwei zueinander koaxial angeordnete, voneinander unabhängig axial verschiebbare Schaltwellen vorhanden, die mit je einer zugehörigen Ausgangswelle zusammenwirken und von denen jede Schaltwelle je einen ersten und einen zweiten Linearantrieb aufweist. Bei diesem Ausführungsbeispiel kann der Abtrieb wahlweise an beiden Ausgangswellen, an einer oder auch an keiner Ausgangswelle erfolgen.

Bei einem weiteren Ausführungsbeispiel gemäss Anspruch 11 ist im die Antriebsverbindung zwischen der Eingangswelle und der Schaltwelle oder den Schaltwellen bildenden Getriebezug eine auf ein vorbestimmtes Höchstdrehmoment einstellbare Sicherheits-Rutschkupplung enthalten.

Die Erfindung wird nachfolgend anhand von in der Zeichnung dargestellten Ausführungsbeispielen im einzelnen erläutert. Es zeigen:

Fig. 1 einen Längsschnitt eines Ausführungsbeispiels der Kupplung, der etwa im Massstab 2:1 vergrössert gezeichnet ist;

Fig. 2 einen etwa im gleichen Massstab wie Fig. 1 gezeichneten Längsschnitt eines anderen Ausführungsbeispiels der Kupplung und

Fig. 3 ein stark vereinfacht gezeichnetes Funktionsschema einer Ausführungsform der Kupplung mit vier Ausgangswellen.

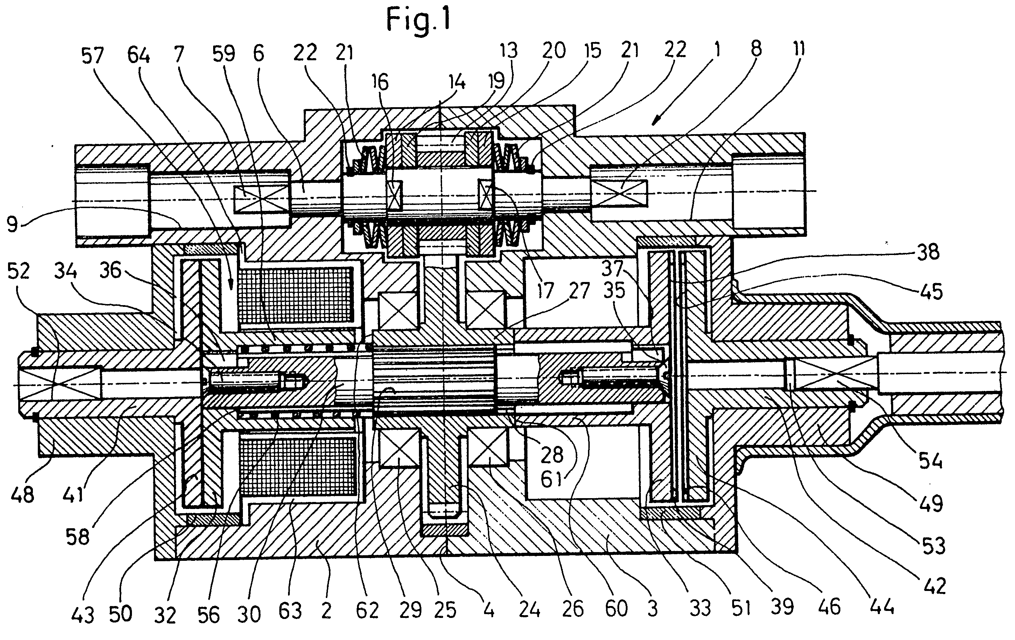

Eine in Fig. 1 dargestellte Verteiler-Kupplung weist ein Kupplungsgehäuse 1 mit zwei Gehäusehälften 2 und 3 auf, die zur Trennebene 4 symmetrisch gestaltet sind. Eine im Gehäuse 1 axial unverschiebbar gelagerte Eingangswelle 6 ist als Durchgangswelle ausgebildet und bildet an beiden Wellenenden je einen als Anschlussteil dienenden Vierkant 7 und 8, von denen jeder in einer Zugangsbohrung 9 bzw. 11 der zugeordneten Gehäusehälfte 2 bzw. 3 zugänglich und mit einem Antriebselement verbindbar ist, beispielsweise mit einem passenden Kupplungsstück einer biegsamen Welle.

Im zentralen Bereich der Eingangswelle 6 ist auf dieser ein Zahnritzel 13 frei drehbar gelagert. Die Antriebsverbindung zwischen dem Zahnritzel 13 und der Eingangswelle 6 erfolgt über eine Sicherheits-Rutschkupplung, die zwei Mitnehmerscheiben 14 und 15, die auf der Eingangswelle 6 axial verschiebbar, mit dieser mittels in den Wellenumfang eingearbeiteter Mitnehmerflächen 16 und 17 jedoch auf Drehung verbunden sind, sowie Kupplungsscheiben 19 und 20 aufweist, die mit dem Zahnritzel 13 auf Drehung verbunden sind. Zwischen Mitnehmerscheibe 14 und Kupplungsscheibe 10 sowie zwischen Mitnehmerscheibe 15 und Kupplungsscheibe 20 befindet sich je ein in der Zeichnung nicht dargestellter Reibbelag, der von der zugehörigen Mitnehmerscheibe 14 bzw. 15 gegen die zugeordnete Kupplungsscheibe 19 bzw. 20 angepresst wird. Die Anpresskraft für jede Mitnehmerscheibe 14 und 15 erzeugen Tellerfedern 21, die zwischen der betreffenden Mitnehmerscheibe 14, 15 und einem zugeordneten, auf der Eingangswelle 6 sitzenden Sicherungsring 22 eingespannt sind.

Das Zahnritzel 13 kämmt mit einem Zahnrad 24, das im zentralen Bereich des Gehäuses 1 mit zur Eingangswelle 6 paralleler Drehachse axial unverschiebbar mittels die radialen und axialen Lagerkräfte aufnehmenden Rillenkugellagern 25 und 26 gelagert ist. Mit dem Zahnrad 24 würde bei Verwendung eines Winkelgetriebes beispielsweise eine Schnecke in Eingriff stehen. Die Eingangswelle müsste dann allerdings im rechten Winkel zur Drehachse des Zahnrades 24 im Kupplungsgehäuse 1 gelagert sein.

In der Bohrung seiner Radnabe 27 ist das Zahnrad 24 mit einer geraden Innenverzahnung 28 versehen, mit der eine entsprechende Aussenverzahnung 29 in Eingriff ist, die im zentralen Bereich einer Schaltwelle 30 ausgebildet ist. Auf diese Weise ist die Schaltwelle 30 in der Radnabe 27 des Zahnrads 24 axial verschiebbar gelagert, mit dem Zahnrad 24 jedoch auf Drehung verbunden.

An jedem Ende der Schaltwelle 30 ist je ein Zahnteller 32 und 33 vorgesehen, die beide gleich ausgebildet sind, mittels je einer zugehörigen Senkkopfschraube 34 bzw. 35, die vom Wellenende her in die Schaltwelle 30 eingeschraubt ist, an dieser befestigt und durch je eine in eine Nut am Wellenende eingreifende Passfeder 36 bzw. 37 mit der Schaltwelle 30 auf Drehung verbunden sind. Die Zahnteller 32, 33 weisen eine Planfläche 38 als von der Schaltwelle 30 abgekehrte Endfläche auf, von deren äusserer Randzone sich Mitnehmerzähne 39 axial erstrecken. Jeder Zahnteller 32 und 33 bildet einen Mitnehmerteil für die Zusammenwirkung mit einem Abtriebsteil am jeweils zugekehrten Ende je einer ersten Ausgangswelle 41 und einer zweiten Ausgangswelle 42, die axial unverschiebbar und koaxial zur Schaltwelle 30 gelagert sind. Die Ausgangswellen 41 und 42 sind gleich ausgebildete Hohlwellen, deren der Schaltwelle 30 zugekehrte Wellenenden je einen den Zahntellern 32 und 33 entsprechend gestalteten Zahnteller 43 bzw. 44 bilden, die als Abtriebsteil der zugehörigen Ausgangswelle 41 bzw. 42 dienen und, in entsprechender Weise wie die Zahnteller 32 und 33, eine Planfläche 45 mit von dieser axial vorspringenden Mitnehmerzähnen 46 aufweisen. Durch in Axialrichtung erfolgendes Annähern des Zahntellers 32 oder 33 an den Zahnteller 43 bzw. 44 kommen die Mitnehmerzähne 39 und 46 formschlüssig miteinander in Eingriff, so dass ein Drehmoment von der Schaltwelle 30 auf die betreffende Ausgangswelle 41 oder 42 übertragbar ist. Da die Mitnehmerzähne 39 und 46 gerade Zahnflanken oder Zahnflanken mit einer Neigung haben, die kleiner als der Reibungswinkel ist, ergibt sich aufgrund des Drehmoments keine in Axialrichtung wirkende Schubkraft, d.h., die Drehmomentübertragung erfolgt axialkraftfrei.

Jede der Ausgangswellen 41 und 42 ist in einem Gehäusedeckel 48 bzw. 49 gelagert, die an der zugeordneten Gehäusehälfte 2 bzw. 3 angeflanscht sind, wobei der Deckel 48 an einer Distanzbuchse 50 und der Deckel 49 an einer Distanzbuchse 51 anliegt. Die äusseren Enden der Bohrung der Ausgangswellen 41 und 42 sind in einen Mitnehmervierkant 52 bzw. 53 erweitert, in die Antriebselemente 54 einsteckbar sind, von denen lediglich eines in Verbindung mit der Ausgangswelle 42 in Fig. 1 eingezeichnet ist.

Zum Erzeugen der die Zahnteller 32 und 43 oder die Zahnteller 33 und 44 einander annähernden axialen Verschiebebewegungen der Schaltwelle 30 ist ein erster und ein zweiter Linearantrieb vorgesehen, von denen der eine durch eine Schrauben-Druckfeder 56 und der zweite durch einen als Ganzes mit 57 bezeichneten Elektromagneten gebildet ist. Die Druckfeder 56 sitzt im Bereich zwischen dem Zahnteller 32 und der Verzahnung 29 auf der Schaltwelle 30 und stützt sich mit ihrem einen Ende an der axialen Endfläche 62 der Radnabe 27 und mit ihrem gegenüberliegenden Ende an einer Innenschulter 58 ab, die durch das innere Ende eines erweiterten Bohrungsabschnitts der Bohrung eines Nabenteils 59 des Zahntellers 32 gebildet ist. Dieser Nabenteil 59 ist gegen das Zahnrad 24 hin axial verlängert und bildet gewissermassen ein die Druckfeder 56 umgebende Federgehäuse. Die von der Druckfeder 56 erzeugtes Axialkraft hält die axial verschiebbare Schaltwelle 30 normalerweise in derjenigen Endstellung, in der die Zähne 39 des Zahntellers 32 mit den Zähnen 46 des Zahntellers 43 in Kupplungseingriff sind. Diese Betriebsstellung ist in Fig. 1 eingezeichnet.

Damit dieser Kupplungseingriff axialkraftfrei erfolgt, der Zahnteller 43 also nicht durch die von der Druckfeder 56 erzeugte Kraft axial belastet wird, ist ein erster Anschlag vorgesehen, der durch die Anlage der inneren Endfläche des axial nach einwärts verlängerten Nabenteils 60 des Zahntellers 33 an der zugekehrten axialen Endfläche 61 der Radnabe 27 des Zahnrads 24 gebildet ist. Der so gebildete Anschlag definiert die axiale Endstellung, die die Schaltwelle 30 unter Einfluss der Druckfeder 56 einnimmt, in der Weise, dass im eingekuppelten Zustand zwischen den Planflächen 38 und 45 der Zahnteller 32 bzw. 43 und den Zahnköpfen der zugekehrten Mitnehmerzähne 46 bzw. 39 ein kleines axiales Spiel, beim Ausführungsbeispiel in der Grössenordnung von 0,1 mm, vorhanden ist.

Die andere axiale Endstellung der verschiebbaren Schaltwelle 30, die durch Verschieben der Schaltwelle 30 entgegen der Federkraft der Druckfeder 56 mittels des Elektromagneten 57 erreicht wird, ist durch einen zweiten Anschlag definiert, der durch Anlage der axial innenliegenden Endfläche des Nabenteils 59 an der zugekehrten axialen Endfläche 62 der Radnabe 27 des Zahnrads 24 gebildet ist. Durch diesen zweiten Anschlag ist die betreffende Endstellung so definiert, dass die beiden Zahnteller 32 und 43 miteinander ausser Eingriff sind, an den Zahntellern 33 und 44 jedoch die formschlüssige Kupplungsverbindung zustande kommt, wobei, wie bei der zuvor beschriebenen, in Fig. 1 dargestellten anderen Endstellung jedoch ein axiales Spiel zwischen den Planflächen 38, 45 der Zahnteller 33 bzw. 44 und den zugekehrten Zahnköpfen der Mitnehmerzähne 46 bzw. 39 vorhanden ist, so dass die Drehmomentübertragung auch in diesem Schaltzustand axialkraftfrei erfolgt.

Der Nabenteil 59 des Zahntellers 32 bildet einen Tauchanker des Elektromagneten 57, den die Magnetwicklung in einem Spulenkäfig 63 umgibt. Der Spulenkäfig 63 ist durch die an seinem äusseren Flanschrand 64 anliegende Distanzbuchse 50 gesichert. Der sich vom Nabenteil 59 radial nach auswärts erstreckende Zahnteller 32 bildet den Jochteil des Ankers des Elektromagneten 57.

Das vorstehend beschriebene, in Fig. 1 dargestellte Ausführungsbeispiel ermöglicht die wahlweise Drehmomentübertragung auf die erste Ausgangswelle 41 oder die zweite Ausgangswelle 42. Da die Eingangswelle 6 als Durchgangswelle ausgebildet ist, kann das der Antriebsseite der Eingangswelle 6 gegenüberliegende Wellenende derselben als zusätzlicher Getriebeausgang dienen. Bei der beschriebenen Bauart der Sicherheits-Rutschkupplung handelt es sich um ein in sich geschlossenes System, bei dem die an den Kupplungsscheiben 19 und 20 wirkenden Anpresskräfte innerhalb der Eingangswelle 6 vollständig aufgenommen sind. Das Vorhandensein der Sicherheits-Rutschkupplung verursacht, wenn man von der geringen zusätzlichen Gewichtsbelastung absieht, daher keinerlei zusätzliche Lagerbelastungen.

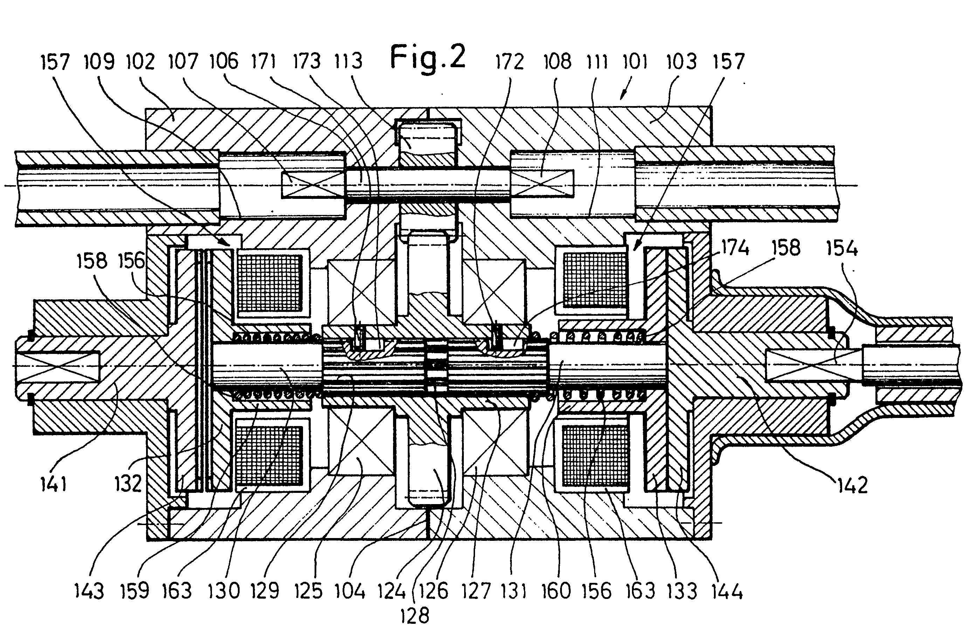

Fig. 2 zeigt ein weiteres Ausführungsbeispiel, bei dem Teile, die solchen des Ausführungsbeispiels gemäss Fig. 1 entsprechen, mit Bezugszahlen bezeichnet sind, die gegenüber Fig. 1 um 100 vergrössert sind. Das Beispiel gemäss Fig. 2 unterscheidet sich vom erstbeschriebenen Ausführungsbeispiel dadurch, dass das Zahnritzel 113 ohne Verwendung einer Sicherheits-Rutschkupplung fest auf der Eingangswelle 106 angebracht ist. Es könnte aber auch eine Rutschkupplung vorgesehen sein, wie auch bei dem Ausführungsbeispiel gemäss Fig. 1 auf eine Rutschkupplung verzichtet werden könnte. Ein weiterer, wesentlicher Unterschied besteht darin, dass anstelle einer einzigen durchgehenden Schaltwelle 30, die für die Zusammenwirkung mit beiden Ausgangswellen 41 und 42 vorgesehen ist, für jede der beiden Ausgangswellen 141 und 142 je eine eigene Schaltwelle 130 bzw. 131 vorhanden ist. Die beiden Schaltwellen 130 und 131 sind koaxial zwischen den zugekehrten Zahntellern 143 und 144 der ersten Ausgangswelle 141 bzw. der zweiten Ausgangswelle 142 angeordnet. jede Schaltwelle 130 und 131 weist am der zugeordneten Ausgangswelle benachbarten Ende einen Zahnteller 132 bzw. 133 auf. Die Ausbildung der Zahnteller 132, 133, 143 und 144 entspricht derjenigen des erstbeschriebenen Ausführungsbeispiels gemäss Fig. 1.

Jede der Schaltwellen 130 und 131 ist mit ihrem inneren Endbereich in der Radnabe 127 des Zahnrads 124 unabhängig von der anderen Schaltwelle axial verschiebbar gelagert, durch eine entsprechende Verzahnung mit der Radnabe 127 jedoch auf Drehung verbunden. Jede Schaltwelle 130 und 131 ist durch je eine eigene Schrauben-Druckfeder 156, die beide in gleicher Weise wie die Druckfeder 56 des Ausführungsbeispiels von Fig. 1 ausgebildet und angeordnet sind, für die Bewegung in die der zugeordneten Ausgangswelle 141 und 142 angenäherte Endstellung vorgespannt. Zum Zurückbewegen der Schaltwellen 130 und 131 entgegen der Kraft der Druckfedern 156 weist jede Schaltwelle 130 und 131 je einen Elektromagneten 157 auf, die in gleicher Weise angeordnet und ausgebildet sind wie der Elektromagnet 57 von Fig. 1. Zum Definieren der axialen Endstellungen der Schaltwellen 130 und 131 in der Weise, dass an den Zahntellern 132 und 143 bzw. 133 und 144 im eingekuppelten Zustand das gewünschte axiale Spiel für axialkraftfreie Drehmomentübertragung vorhanden ist, weist jede Schaltwelle 130 und 131 einen eigenen Anschlag auf, die durch in die Bohrung der Radnabe 127 ragende Anschlagbolzen 171 und 172 gebildet sind, die sich in je eine in die Schaltwelle 130 bzw. die Schaltwelle 131 eingearbeitete Nut 173 bzw. 174 erstrecken und in der betreffenden Endstellung am Ende der zugehörigen Nut anliegen, wie es in Fig. 2 bei dem Anschlagbolzen 172 in der Nut 174 eingezeichnet ist. In dieser dargestellten Betriebsstellung erfolgt die Drehmomentübertragung von der Schaltwelle 131 auf die Ausgangswelle 142, während die andere Schaltwelle 130, da sie durch den eingeschalteten Elektromagneten von der zugehörigen Ausgangswelle 141 zurückgezogen ist, ohne Antriebswirkung ist. Bei dem Beispiel gemäss Fig. 2 ist im Unterschied zu dem Beispiel von Fig. 1 der gleichzeitige Abtrieb an beiden Ausgangswellen 141 und 142 möglich sowie der Abtrieb an nur einer der Ausgangswellen 141 oder 142 oder ein antriebsloser Zustand, bei dem auf keine der beiden Wellen 141 und 142 ein Drehmoment übertragen wird.

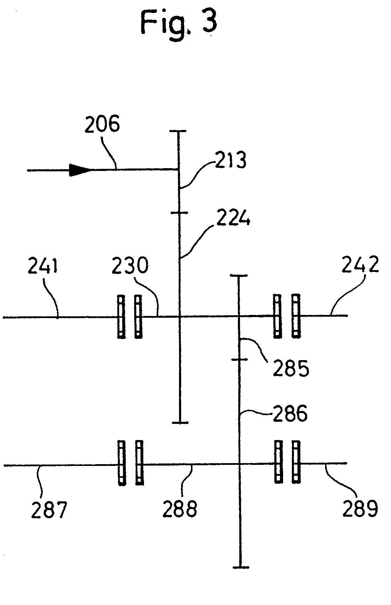

Fig. 3 zeigt in stark schematisch vereinfachter Darstellung ein Beispiel der Vielzahl von Erweiterungsmöglichkeiten, die bei der vorliegenden Erfindung gegeben sind, indem man die steuerbare Schaltwelle oder die steuerbaren Schaltwellen mit einer oder mehreren weiteren Schaltwellen getrieblich kuppelt. Bei dem in Fig. 3 angedeuteten Beispiel ist eine von der Eingangswelle 206 über Räder 213 und 224 antreibbare Schaltwelle 230, die für die Zusammenwirkung mit zugeordneten Ausgangswellen 241 und 242 vorgesehen ist, über Getrieberäder 285 und 286 mit einer weiteren Schaltwelle 288 getrieblich verbunden, die wiederum mit Ausgangswellen 287 und 289 zusammenwirkt. Dieses Ausführungsbeispiel ermöglicht also die Verteilung der Antriebskraft der Eingangswelle 206 wahlweise auf vier Ausgangswellen.

**Patentansprüche**

1. Verteiler-Kupplung zum Übertragen eines Drehmoments von einer antriebsseitigen Eingangswelle (6; 106; 206) auf mindestens eine Ausgangswelle, die für die Drehbetätigung einer Verstelleinrichtung eines Fahrzeugsitzes vorgesehen ist, dadurch gekennzeichnet, dass eine axial verschiebbar gelagerte, zur Ausgangswelle (41, 42; 141, 142; 241, 242; 287, 289) koaxial angeordnete Schaltwelle (30; 130, 131; 230, 288) vorgesehen ist, die von der Eingangswelle (6; 106; 206) antreibbar ist, dass zum wahlweisen axialen Verschieben der Schaltwelle (30; 130, 131; 230, 288) ein erster und ein zweiter Linearantrieb (56, 57; 156, 157, 158) vorhanden sind, mittels denen eine in der einen Richtung wirkende bzw. eine in der anderen Richtung wirkende, an der Schaltwelle angreifende Axialkraft erzeugbar ist, dass die Schaltwelle (30; 130, 131; 230, 288) einen an ihr im Bereich ihres der zugeordneten Ausgangswelle (41, 42; 141, 142; 241, 242; 287, 289) zugekehrten Endes befestigten Mitnehmerteil (32, 33; 132, 133) besitzt, der durch Verschieben der Schaltwelle in die eine axiale Endstellung mit einem Abtriebsteil der Ausgangswelle für axialkraftfreie Drehmomentübertragung formschlüssig verbindbar ist, und dass ein diese axiale Endstellung der Schaltwelle (30; 130, 131; 230, 288) festlegender, diese gegen die Axialkraft des Linearantriebs abstützender Anschlag (61, 62; 171 bis 174) vorgesehen und so angeordnet ist, dass ein axiales Spiel zwischen dem Abtriebsteil und dem formschlüssig mit diesem verbundenen Mitnehmerteil vorhanden ist.

2. Kupplung nach Anspruch 1, dadurch gekennzeichnet, dass die Schaltwelle (30) zwischen der Ausgangswelle (41) und einer koaxial angeordneten zweiten Ausgangswelle (42) angeordnet ist und im Bereich ihres der zweiten Ausgangswelle (42) zugekehrten Endes einen zweiten Mitnehmerteil (33) für die Zusammenwirkung mit einem Abtriebsteil (44) der zweiten Ausgangswelle (42) besitzt und dass ein zweiter Anschlag (61, 62) zum Festlegen der anderen axialen Endstellung der Schaltwelle (30) vorgesehen und so angeordnet ist, dass ein axiales Spiel zwischen dem Abtriebsteil der zweiten Ausgangswelle (42) und dem in der zweiten axialen Endstellung formschlüssig mit diesem verbundenen zweiten Mitnehmerteil vorhanden ist.

3. Kupplung nach Anspruch 1 oder 2, dadurch gekennzeichnet, dass jeder Mitnehmerteil und jeder Abtriebsteil durch je einen an den einander zugekehrten Wellenenden der Schaltwelle (30; 130, 131) bzw. der Ausgangswelle (41, 42; 141, 142) befestigten Zahnteller (32, 33, 43, 44; 132, 133, 143, 144) gebildet ist, die einander zugekehrte Planflächen (38, 45) mit von diesen axial vorspringenden Zähnen (39, 46) aufweisen, die bei der durch den zugeordneten Anschlag (61, 62; 171 bis 174) festgelegten Endstellung der Schaltwelle (30; 130, 131) unter Beibehaltung eines zwischen Zahnköpfen der Zähne (39, 46) und Planflächen (38, 45) vorhandenen axialen Spiels für die axialkraftfreie formschlüssige Kraftübertragung miteinander in Eingriff sind.

4. Kupplung nach einem der Ansprüche 1 bis 3, dadurch gekennzeichnet, dass als ersten Linearantrieb eine die Schaltwelle (30; 130, 131) durch Federkraft normalerweise in der einen axialen Endstellung haltende Federanordnung (56) und als zweiter Linearantrieb ein Elektromagnet (57; 157) vorgesehen ist, der zum gegen die Federkraft erfolgenden Verschieben der Schaltwelle (30; 130, 131) in die andere Endstellung einschaltbar ist.

5. Kupplung nach den Ansprüchen 3 und 4, dadurch gekennzeichnet, dass ein vom Zahnteller (32; 132, 133) am Schaltwellenende axial nach einwärts verlängerter Nabenteil (59; 159, 160) des Zahntellers zusammen mit dem zugeordneten Endbereich der Schaltwelle (30; 130, 131) als beweglicher Kern des Elektromagneten (57, 157) vorgesehen ist, dessen Spule (63; 163) koaxial um diesen Kern gewickelt ist, wobei der Zahnteller (32; 132, 133) das mit dem Kern bewegliche Ankerjoch bildet.

6. Kupplung nach einem der Ansprüche 1 bis 5, dadurch gekennzeichnet, dass ein die Schaltwelle (30; 130, 131) mit der Eingangswelle (6; 106) verbindender Getriebezug ein mit der Schaltwelle auf Drehung verbundenes Zahnrad (24; 124) aufweist, relativ zu dem die Schaltwelle (30; 130, 131) zwischen ihren Endstellungen axial verschiebbar ist.

7. Kupplung nach den Ansprüchen 4 bis 6, dadurch gekennzeichnet, dass das Zahnrad (24; 124) der Schaltwelle (30; 130, 131) im Kupplungsgehäuse (1; 101) axial unverschiebbar gelagert ist und eine Radnabe (27; 127) mit innerer, gerader Verzahnung (28; 128) aufweist, die mit einer Verzahnung (29; 129) der axial in der Radnabe (27; 127) verschiebbaren Schaltwelle (30; 130, 131) in Eingriff ist, und dass als Federanordnung des ersten Linearantriebs eine Schrauben-Druckfeder (56; 156) vorgesehen ist, die auf der Schaltwelle (30; 130, 131) sitzt und zwischen einer Schulter (58; 158) am Nabenteil (59; 159, 160) des zugeordneten Zahntellers (32; 132, 133) und der Radnabe (27; 127) des Zahnrads (24; 124) eingespannt ist.

8. Kupplung nach Anspruch 7, dadurch gekennzeichnet, dass die Bohrung des in Richtung auf das Zahnrad (24; 124) hin axial verlängerten Nabenteils (59; 159, 160) des Zahntellers (32; 132, 133) in dem dem Zahnrad (24; 124) zugekehrten Bohrungsendbereich erweitert ist, dass in diesen erweiterten Endbereich die Druckfeder (56; 156) eingreift und dass der erweiterte Endbereich mit seinem inneren Ende die Schulter (58; 158) bildet, an der sich das vom Zahnrad (24; 124) abgekehrte Ende der Druckfeder (56; 156) abstützt.

9. Kupplung nach Anspruch 5 und einem der Ansprüche 6 bis 8, dadurch gekennzeichnet, dass als Anschlagflächen für die Bildung mindestens eines Anschlags die axiale Endfläche (61, 62) der Radnabe (27) des Zahnrads (24) und die zugekehrte Endfläche des Nabenteils (59, 60) des Zahntellers (32, 33) vorgesehen sind.

10. Kupplung nach Anspruch 1 oder einem der Ansprüche 3 bis 9, dadurch gekennzeichnet, dass zwei zueinander koaxial angeordnete, voneinander unabhängig axial verschiebbare Schaltwellen (130 und 131) vorhanden sind, die an ihren voneinander abgekehrten Enden je ein Mitnehmerteil (132, 133) für die Zusammenwirkung mit einem Abtriebsteil (143, 144) einer Ausgangswelle (141 bzw. 142) besitzen und im Bereich ihrer einander zugekehrten Enden gemeinsam von der Eingangswelle (106) über einen Getriebezug antreibbar sind, und dass jede der beiden Schaltwellen (130 und 131) je einen ersten und einen zweiten Linearantrieb aufweisen, von denen der erste Linearantrieb durch eine Federanordnung (156) gebildet ist, die die Schaltwelle (130 und 131) normalerweise in der durch den Anschlag (171 bis 174) festgelegten axialen Endstellung hält, in der der betreffende Mitnehmerteil mit dem Abtriebsteil formschlüssig verbunden ist, und von denen der zweite Linearantrieb durch je einen Elektromagneten (157) gebildet ist, der zum Verschieben der Schaltwelle (130, 131) entgegen der Federkraft der Federanordnung (156) einschaltbar ist.

11. Kupplung nach einem der Ansprüche 1 bis 10, dadurch gekennzeichnet, dass im die Antriebsverbindung zwischen der Eingangswelle (6; 106) und der Schaltwelle (30) oder den Schaltwellen (130, 131) bildenden Getriebezug eine auf ein vorbestimmtes Höchstdrehmoment einstellbare Sicherheits-Rutschkupplung enthalten ist.

12. Kupplung nach Anspruch 11, dadurch gekennzeichnet, dass der Getriebezug ein auf der Eingangswelle 6 drehbar gelagertes Zahnritzel (13) aufweist und dass zur Bildung der Rutschkupplung an beiden Seitenflächen des Zahnritzels (13) Kupplungsscheiben (19, 20) anliegen, die zwischen dem Zahnritzel (13) und Mitnehmerscheiben (14, 15) eingespannt sind, die mit der Eingangswelle (6) auf Drehung verbunden, relativ zu dieser axial verschiebbar und durch Federkraft (21) gegen die anliegende Kupplungsscheibe (19 bzw. 20) angepresst sind.

## Claims

1. Distribution-clutch for transmitting a torque from one input shaft (6; 106; 206) on the drive side to at least one output shaft, which is provided for the rotational operation of an adjusting mechanism of a vehicle seat, characterised in that a control shaft (30; 130, 131; 230, 288) is provided which is mounted so that it can be moved axially, which is arranged so that it is coaxial with the output shaft (41, 42; 141, 142; 241, 242, 287, 289) and which can be driven by the input shaft (6; 106; 206), in that a first and a second linear drive (56, 57; 156, 157, 158) are provided for the axial movement as required of the control shaft (30; 130, 131; 230, 288), by means of which an axial force can be generated which operates in one or the other direction and which acts on the control shaft, in that the control shaft (30; 130, 131; 230, 288) is provided with a drive member (32, 132; 133) which is secured to it in the area of its end which faces the associated output shaft (41, 42; 141, 142; 241, 242, 287, 289), whereby the drive member by the sliding of the control shaft into one axial end position can be connected positively to an output member of the output shaft for the transmission of torque which is free of axial force and in that a stop (61, 62; 171 to 174) which locates this axial end position of the control shaft (30; 130, 131; 230, 288) and which supports it against the axial force of the linear drive is provided and so arranged that there is an axial play between the output member and the drive member connected positively to it.

2. Clutch according to claim 1, characterised in that, the control shaft (30) is arranged between the output shaft (41) and a second output shaft (42) arranged coaxially and is provided in the area of its end facing the second output shaft (42) with a second drive member (33) for interaction with a output member (44) of the second output shaft (42) and in that a second stop (61, 62) is provided for determining the other axial end position of the control shaft (30) and is arranged in such a way that there is axial play between the output member of the second output shaft (42) and the second drive member which is positively connected to this in the second axial end position.

3. Clutch according to claim 1 or 2, characterised in that each drive member and each output member is formed by in each case a toothed plate (32, 33, 43, 44; 132, 133, 143, 144) attached to the shaft ends of the control shaft (30; 130, 131) or the output shaft (41, 42; 141, 142) which face each other whereby the toothed plates are provided with plane surfaces (38, 45) facing each other with teeth (39, 46) protruding axially from these which engage with each other for positive power transmission without an axial force in the end position of the control shaft (30; 130, 131) determined by the associated stop (61, 62; 171 to 174) whilst maintaining an axial play which is present between the tips of the teeth (39, 46) and plane surfaces (38, 45).

4. Clutch according to one of claims 1 to 3, characterised in that a spring arrangement (56) which holds the control shaft (30; 130, 131) normally in one axial end position by spring action is provided as the first linear drive and an electromagnet (57; 157) is provided as a second linear drive, which can be engaged for the sliding of the control shaft (30; 130, 131) against the spring force into the other end position.

5. Clutch according to claims 3 and 4, characterised in that a hub member (59; 159, 160) of the toothed plate which extends inwards axially from the toothed plate (32; 132, 133) at the control shaft end together with the associated end area of the control shaft (30; 130, 131) is provided as a moveable core of the electromagnet (57, 157), the coil (63; 163) of which is wound coaxially around this core, whereby the toothed plate (32; 132, 133) forms the armature yoke which can be moved with the core.

6. Clutch according to one of claims 1 to 5, characterised in that a gear train connecting the control shaft (30; 130, 131) to the input shaft (6; 106) is provided with a gear (24; 124) connected to the control shaft on rotation, relative to which the control shaft (30; 130, 131) can be slid axially between its end positions.

7. Clutch according to claims 4 to 6, characterised in that the gear (24; 124) of the control shaft (30; 130, 131) is mounted in the clutch casing (1; 101) so that it cannot be slid axially and is provided with a gear hub (27; 127) with internal straight toothing (28; 128), which is in engagement with toothing (29; 129) of the control shaft (30; 130, 131) which can be slid axially in the gear hub (27; 127) and in that a compression spring (56; 156) is provided as a spring arrangement of the first linear drive, which is seated on the control shaft (30; 130, 131) and which is clamped between a shoulder (58; 158) at the hub member (59; 159, 160) of the associated toothed plate (32; 132, 133) and the gear hub (27; 127) of the gear (24; 124).

8. Clutch according to claim 7, characterised in that the bore of the hub member (59; 159, 160) of the toothed plate (32; 132, 133) extended axially in the direction of the gear (24; 124) is extended in the end area of the bore facing the gear (24; 124), in that the compression spring (56; 156) engages with this extended end area and in that the extended end area with its international end forms the shoulder (58; 158), at which the end of the compression spring (56; 156) turned away from the gear (24; 124) is supported.

9. Clutch according to claim 5 and one of claims 6 to 8, characterised in that the axial end surface (61, 62) of the gear hub (27) of the gear (24) and the facing end surface of the hub member (59, 60) of the toothed plate (32, 33) are provided as stop surfaces for forming at least one stop.

10. Clutch according to claim 1 or one of claims 3 to 9, characterised in that two control shafts (130 and 131) which are arranged coaxially with each other and which can be slid axially independently of each other, are provided, which have at their ends turned away from each other in each case a drive member (132, 133) to operate in conjunction with an output member (143, 144) of an output shaft (141 or 142) and can be driven together by the input shaft (106) via a gear train in the area of their ends which face each other and in that each of the two control shafts (130 and 131) are provided in each case with a first and a second linear drive, the first linear drive of which is formed by a spring arrangement (156), which normally holds the control shaft (130 and 131) in the axial end position determined by the stop (171 to 174), in which the corresponding drive member is connected positively to the output member and the second linear drive of which is formed by in each case an electromagnet (157), which can be actuated for sliding the control shaft (130, 131) against the spring action of the spring arrangement (156).

11. Clutch according to one of claims 1 to 10, characterised in that a safety slipping clutch which can be set to a predetermined maximum torque is contained in the gear train which forms the drive connection between the input shaft (6; 106) and the control shaft (30) or the control shafts (130, 131).

12. Clutch according to claim 11, characterised in that the gear train is provided with a pinion (13) which is rotatably mounted on the input shaft 6 and in that in order to form the slipping clutch clutch plates (19, 20) abut at both lateral surfaces of the pinion (13), which are clamped between the pinion (13) and the driving plates (14, 15), which are connected to the input shaft (6) on rotation, which can be slid axially relative to the latter and which are pressed against the abutting clutch plate (19 or 20) by spring action (21).

## Revendications

1. Embrayage de distribution pour transmettre un couple d'un arbre d'entrée (6; 106; 206), placé du côté-entraînement; à au moins un arbre de sortie, qui est prévu pour l'entraînement en rotation d'un dispositif de manœuvre d'un siège de véhicule, caractérisé en ce qu'il est prévu un arbre de commande (30; 130, 131; 230, 288) disposé coaxialement à l'arbre de sortie (41, 42; 141, 142; 241, 242, 287, 289), monté avec possibilité de translation axiale et qui peut être entraîné par l'arbre d'entrée (6; 106; 206), en ce que, pour provoquer une translation axialechoisie de l'arbre de commande (30; 130, 131; 230, 288), il est prévu un premier et un second entraînement linéaire (56, 57; 156, 157, 158), au moyen desquels peut être produite une force axiale agissant respectivement dans un premier sens ou dans un deuxième sens sur l'arbre de commande, en ce que l'arbre de commande (30; 130, 131; 230, 288) comporte une partie d'entraînement (32, 33; 132, 133), fixée sur lui dans la zone de son extrémité dirigée vers l'arbre de sortie associé (41, 42; 141, 142; 241, 242, 287, 289) et qui peut être reliée par conjugaison de formes, par translation de l'arbre de commande jusque dans la première des positions limites axiales, avec une partie menée de l'arbre de sortie en vue d'une transmission de couple qui soit exempte de force axiale, et en ce qu'il est prévu une butée (61, 62; 171 à 174), définissant cette position limite axiale de l'arbre de commande (30; 130, 131; 230, 288), cette butée entrant en appui en opposition à la force axiale de l'entraînement linéaire et étant disposée de telle sorte qu'il existe un jeu axial entre la partie menée et la partie d'entraînement reliée par conjugaison de formes avec elle.

2. Embrayage selon la revendication 1, caractérisé en ce que l'arbre de commande (30) est disposé entre l'arbre de sortie (41) et un second arbre de sortie (42) disposé coaxialement, et comporte, dans la zone de son extrémité dirigée vers le second arbre de sortie (42), une seconde partie d'entraînement (33) pour coopérer avec une partie menée (44) du second arbre de sortie (42) et en ce qu'il est prévu une seconde butée (61, 62) pour définir la seconde position limite axiale de l'arbre de commande 30), cette butée étant disposée de telle sorte qu'il existe un jeu axial entre la partie menée du second arbre de sortie (42) et la seconde partie d'entraînement, reliée par conjugaison de formes avec cet arbre dans la seconde position limite axiale.

3. Embrayage selon la revendication 1 ou 2, caractérisé en ce que chaque partie d'entraînement et chaque partie menée sont constituées respectivement par un plateau denté (32, 33, 43, 44; 132, 133, 143, 144) fixé sur une extrémité correspondante de l'arbre de commande (30; 130, 131) ou de l'arbre de sortie (41, 42; 141, 142), respectivement lesdits plateaux dentés comportant des surfaces planes (38, 45) dirigées l'une vers l'autre et pourvues de dents (39, 46) faisant saillie axialement desdites surfaces et qui, dans la position limite de l'arbre de commande (30; 130, 131) qui est établie par la butée associée (61, 62; 171 à 174) entrent en prise mutuellement, en conservant un jeu axial existant entre les têtes des dents (39, 46) et les surfaces planes (38, 45) pour la transmission de couple par conjugaison de formes et de façon exempte de force axiale.

4. Embrayage selon une des revendications 1 à 3, caractérisé en ce que, comme premier entraînement linéaire, il est prévu un système à ressort (56) maintenant normalement l'arbre de commande (30; 130, 131) par une force élastique dans la première position limite axiale et, comme second entraînement linéaire, un électro-aimant (57; 157), qui peut être enclenché en vue d'une translation, effectuée en opposition à la force élastique, de l'arbre de commande (30; 130, 131) jusqu'à la seconde position limite.

5. Embrayage selon les revendications 3 et 4, caractérisé en ce qu'une partie-moyeu (59; 159, 160), prolongée axialement vers l'intérieur, du plateau denté (32; 132, 133) monté à l'extrémité de l'arbre de commande est combinée avec la zone extrême associée de l'arbre de commande (30; 130, 131) pour former un noyau mobile de l'électro-aimant (57; 157), dont la bobine (63; 163) est enroulée coaxialement autour de ce noyau, le plateau denté (32; 132, 133) constituant la culasse d'armature mobile avec le noyau.

6. Embrayage selon une des revendications 1 à 5, caractérisé en ce qu'une transmission, assurant la liaison de l'arbre de commande (30; 130, 131) avec l'arbre d'entrée (6; 106), comporte un engrenage (24; 124), relié de façon tournante à l'arbre de commande et par rapport auquel l'arbre de commande (30; 130, 131) est déplaçable par translation axiale entre ses positions limites.

7. Embrayage selon les revendications 4 à 6, caractérisé en ce que l'engrenage (24; 124) de l'arbre de commande (30; 130, 131) est monté dans le carter d'embrayage (1; 101) sans possibilité de translation axiale et comporte un moyeu (27; 127) pourvu d'une denture droite intérieure (28; 128), qui est en prise avec une denture (29; 129) de l'arbre de commande (30; 130, 131) déplaçable par translation axiale dans le moyeu (27; 127), et en ce que le système à ressort du premier entraînement linéaire est constitué par un ressort hélicoïdal de pression (56; 156), qui est monté sur l'arbre de commande (30; 130, 131) et qui est maintenu entre un épaulement (58; 158) de la partie-moyeu (59; 159, 160) du plateau denté associé (32; 132, 133) et le moyeu (27; 127) de l'engrenage (24; 124).

8. Embrayage selon la revendication 7, caractérisé en ce que le trou de la partie-moyeu (59; 159, 160), prolongée axialement en direction de l'engrenage (24; 124), du plateau denté (32; 132, 133) est élargi dans la zone extrême élargie du trou dirigée vers l'engrenage (24; 124), en ce que le ressort de pression (56; 156) s'accroche dans cette zone extrême élargie et en ce que la zone extrême élargie forme par son extrémité intérieure l'épaulement (58; 158) contre lequel s'appuie l'extrémité, opposée à l'engrenage (24; 124), du ressort de pression (56; 156).

9. Embrayage selon la revendication 5 et une des revendications 6 à 8, caractérisé en ce que, comme surfaces de butée pour la création d'au moins une butée, il est prévu la surface extrême axiale (61, 62) du moyeu (27) de l'engrenage (24) et la surface extrême, tournée vers elle, de la partie-moyeu (59, 60) du plateau denté (32, 33).

10. Embrayage selon la revendication 1 ou une des revendications 3 à 9, caractérisé en ce qu'il est prévu deux arbres de commande (130 et 131), disposés coaxialement l'un par rapport à l'autre, déplaçables par translation axiale indépendamment l'un de l'autre, qui comportent à leurs extrémités mutuellement opposées respectivement une partie d'entraînement (132, 133) pour coopérer avec une partie menée (143, 144) d'un arbre de sortie (141 ou 142) et qui peuvent être entraînés en commun, dans la zone de leurs extrémités dirigées l'une vers l'autre, par l'arbre d'entrée (106) par l'intermédiaire d'une transmission et en ce que chacun des deux arbres de commande (130 et 131) comporte respectivement un premier et un second entraînements linéaires parmi lesquels le premier entraînement linéaire est constitué par un système à ressort (156), qui maintient normalement l'arbre de commande (130 et 131) dans la position limite axiale définie par la butée (171 à 174) et dans laquelle la partie d'entraînement correspondante est reliée par conjugaison de formes avec la partie menée, et dont le second entraînement linéaire est constitué par un électro-aimant respectif (157), qui peut être enclenché pour déplacer par translation l'arbre de commande (130, 131) en opposition à la force élastique du système à ressort (156).

11. Embrayage selon une des revendications 1 à 10, caractérisé en ce que, dans la transmission formant la liaison d'entraînement entre l'arbre d'entrée (6; 106) et l'arbre de commande (30) ou bien les arbres de commande (130, 131), il est prévu un embrayage glissant de sécurité, réglable à un couple maximal prédéterminé.

12. Embrayage selon la revendication 11, caractérisé en ce que la transmission comporte un pignon (13) monté de façon tournante sur l'arbre d'entrée (6) et en ce que, pour former l'embrayage glissant, des disques d'embrayage (19, 20) s'appliquent sur les deux surfaces latérales du pignon (13), ces disques étant maintenus entre le pignon (13) et des disques d'entraînement (14, 15), qui sont liés à la rotation avec l'arbre d'entrée (6), qui sont déplaçables par translation axiale par rapport à celui-ci et qui sont appliqués par une force élastique (21) contre le disque d'embrayage correspondant (19 ou 20).

# Fig.1

0 123 802

# Fig.2

157 109 102 107 106 171 173 113   172 108 111 101 103 157

158 156

174 158 154

141 132

143 159 163 130 129 125 104 124 126 127 131 160 156 163 133 144

128

142

13

0 123 802

# Fig. 3